# EUROPÄISCHE PATENTSCHRIFT

(11) **EP 2 539 147 B1**
(45) Veröffentlichungstag und Bekanntmachung des Hinweises auf die Patenterteilung: **20.04.2016**
(21) Anmeldenummer: 11708187.7
(22) Anmeldetag: 23.02.2011
(51) Int. Cl.: B32B 27/08, B32B 7/02, B32B 27/36, B32B 27/40, B29C 47/06, B42D 25/00

(54) **HOCHFLEXIBLES FOLIENVERBUNDMATERIAL UND SEINE VERWENDUNG IN KARTENKÖRPERN**
HIGHLY FLEXIBLE COMPOSITE FILM MATERIAL AND ITS USE IN CARD BODIES
MATÉRIAU COMPOSITE EN FEUILLE HAUTEMENT FLEXIBLE ET SON UTILISATION DANS DES CORPS DE CARTES

(30) Priorität: 25.02.2010 DE 102010009230
(43) Veröffentlichungstag der Anmeldung: 02.01.2013
(73) Patentinhaber: Giesecke & Devrient GmbH, 81677 München (DE)
(72) Erfinder: RIEDL, Josef, 85395 Attenkirchen (DE); BRAUN, Andreas, 80798 München (DE)
(86) Internationale Anmeldenummer: PCT/EP2011/000881
(87) Internationale Veröffentlichungsnummer: WO 2011/104014

(56) Entgegenhaltungen:
- WO-A1-97/37849
- WO-A1-98/34783
- WO-A1-2005/110773
- DE-A1- 2 236 903
- US-A- 4 410 595
- US-A- 5 376 430

## Beschreibung

Die Erfindung betrifft ein Folienverbundmaterial, ein Verfahren zur Herstellung des Folienverbundmaterials, sowie einen Kartenkörper, insbesondere einen Kartenkörper für einen tragbaren Datenträger, der das Folienverbundmaterial enthält, und ein Verfahren zur Herstellung des Kartenkörpers.

Bei der Fertigung von Kartenkörpern, insbesondere für tragbare Datenträger, wie z.B. Chipkarten, werden mehrere übereinander liegende Kunststofffolien miteinander laminiert. Als Kunststofffolien werden wegen ihrer guten Laminierbarkeit meist thermoplastische Folien verwendet, z.B. Folien aus Polyvinylchlorid, Polycarbonat, Polypropylen, Polyethylenterephthalat oder thermoplastischen Polyurethanen. Ein Nachteil von Kartenkörpern aus derartigen thermoplastischen Folien sind ihre mangelhaften mechanischen Eigenschaften hinsichtlich Biegebeanspruchung und schlagartiger Krafteinwirkung. Es kommt dabei zu Spannungen im Kartenkörper, und schließlich zu Rissen. Auch der Einbau elektronischer Module führt meist zu Spannungen, einer Schwächung des Kartenkörpers, und letztendlich zu einer erhöhten Anfälligkeit für Risse und Brüche.

Zur Verbesserung der mechanischen Eigenschaften solcher Kartenkörper ist es vorteilhaft, im Rahmen des Laminierprozesses Folien aus thermoplastischem Elastomer, beispielsweise auf Urethanbasis, einzusetzen. Diese Folien sind außerordentlich elastisch und können die Biegebeanspruchbarkeit und Bruchfestigkeit des Kartenaufbaus deutlich verbessern. In der Druckschrift EP 0 430 282 A2 ist ein Kartenkörper in der Form einer mehrschichtigen Ausweiskarte beschrieben, bei der zwischen dem Kartenkern und entsprechenden Deckfolien jeweils eine Schicht aus thermoplastischem Elastomer vorgesehen ist.

Die Verarbeitung von Folien aus thermoplastischem Elastomer, sogenannten TPE-Folien, im Rahmen eines Laminierprozesses bei der Herstellung eines Kartenkörpers ist jedoch sehr schwierig. Aufgrund ihrer hohen Elastizität sind die Folien sehr "lappig". Die mangelnde Steifigkeit führt zu Problemen bei der Verarbeitung in den Produktionsmaschinen, und die geringe Dimensionsstabilität kann auch Passerprobleme beim Bedrucken der Folien verursachen. Zusätzlich neigt das Material beim Laminieren zum Verlaufen. Ferner besitzen solche Folien einen niedrigen Glasübergangsbereich, der unter 0°C, wobei es in diesem Temperaturbereich flexibel bleibt und nicht spröde wird. Darüberhinaus neigen die Folien beim Stapeln aufgrund ihrer glatten Oberflächen zu Verblockungen, so dass die Folien im Stapel nur schwer vereinzelt und transportiert werden können. Um beim Laminieren solcher Folien mit anderen Materialien wie Polycarbonat, Polyethylenterephthalat, Polyethylenterephthalat-Copolyestern oder Blends aus Polyestern und Polycarbonat eine ausreichende Verbindungssteifigkeit zu erreichen, ist es zudem erforderlich, den Glaspunkt des jeweils anderen Materials zu erreichen. Da dieser Glaspunkt regelmäßig weit über dem Glasübergangsbereich von thermoplastischen Elastomeren liegt, führt dies in Verbindung mit der Abhängigkeit von der Stärke des Abfalls der Viskosität im entsprechenden Temperaturbereich häufig zum Ausschwimmen des thermoplastischen Elastomers. Dies hat zur Folge, dass die verwendeten Laminiermaschinen oft gereinigt werden müssen. Unter Umständen können sogar die an dem thermoplastischen Elastomer anliegenden Folien ebenfalls zu fließen beginnen, und ein darauf befindliches Druckbild deformieren. Es besteht zwar die Möglichkeit, bei niedrigeren Temperaturen zu laminieren, um hierdurch das Ausschwimmen der Folien zu vermeiden, aber beim Laminieren bei niedrigen Temperaturen wird in der Regel kein ausreichend guter Laminatverbund erreicht.
Diese Probleme treten bereits auf, wenn man die für die Herstellung von Datenträgern üblichen Foliendicken von 100 µm bis 300 µm verwendet. Um einen Datenträger deutlich gegen Bruchgefahr zu schützen, reicht es aber meist schon aus, dass man nur circa 30 µm bis 50 µm dicke Schichten aus thermoplastischem Elastomer beidseitig, möglichst weit außen liegend, in den Aufbau einbringt. Diese Dicken sind aber in den üblichen Verarbeitungsprozessen schwierig zu handhaben. Selbst sehr steife Folien wie Polycarbonat-Folien sind bei Schichtdicken von 50 µm oder darunter nicht mehr zu verarbeiten.
Es ist daher erstrebenswert, die positiven Eigenschaften von vergleichsweise steifen thermoplastischen Folien und von Folien aus thermoplastischem Elastomer in einem einzigen Folienmaterial zu kombinieren. Ein Lösungsansatz in dieser Richtung ist in dem Dokument EP 0 384 252 B1 offenbart. Der darin beschriebene Folienverbundwerkstoff weist eine Vielzahl von Schichten auf, wobei eine mittlere Schicht aus thermoplastischem Elastomer hergestellt ist. An diese Schicht schließen sich Schichten aus thermoplastischen Kunststoffen an. Bei der Herstellung des Verbundwerkstoffs werden auf eine Folie, welche die mittlere Schicht bildet, die weiteren Schichten aufgebracht. Ein Aufbringungsverfahren ist die gemeinsame Extrusion.

Einschlägige Folienverbundwerkstoffe werden daneben in den Druckschriften WO 97/37849 A1 und WO 2005/110773 A1 offenbart.

Aufgabe der vorliegenden Erfindung ist es, ein hochflexibles Folienmaterial bereitzustellen, das zur Verwendung als Schicht in einem Kartenkörper geeignet ist. Insbesondere sollte das Folienmaterial im Rahmen der Fertigung eines Kartenkörpers gut verarbeitet werden können und gute mechanische

Eigenschaften des Kartenkörpers garantieren. Erwünschte Eigenschaften eines derartigen Folienmaterials sind
- eine hohe Flexibilität, um die gewünschte Biegebeanspruchbarkeit, insbesondere dynamische Biegebeanspruchbarkeit, der Karte zu gewährleisten;
- die Fähigkeit, Spannungen, Risse und Brüche in der Karte zu vermeiden, insbesondere auch beim Einbau von elektronischen Modulen in die Karte;
- eine gute Laminierbarkeit mit gängigen Karterunaterialien, insbesondere thermoplastischen Folien, bevorzugt ohne Hilfsschichten;
- eine gute Bedruckbarkeit, bevorzugt ohne Druckvorbehandlung;
- eine gute Dimensionsstabilität bei Herstellung und Verarbeitung;
- eine einfache, und bevorzugt preiswerte, Herstellbarkeit;
- eine gute Handhabbarkeit bei der Weiterverarbeitung, insbesondere ein Vermeiden von Verblocken, und
- eine problemlose Integrierbarkeit in den üblichen Prozess der Datenträgerherstellung.

Aufgabe der vorliegenden Erfindung ist es auch, einen Kartenkörper, insbesondere einen Kartenkörper für einen tragbaren Datenträger, bereitzustellen, der die Nachteile des Stands der Technik vermeidet. Insbesondere sollte der Kartenkörper den Einbau elektronischer Module gut tolerieren und eine gute Resistenz gegenüber Spannungsrissen und Brüchen, beispielsweise bei Biegebeanspruchung und schlagartiger Krafteinwirkung, aufweisen.

Die Aufgaben werden gelöst durch das Folienverbundmaterial, das Verfahren zur Herstellung eines Folienverbundmaterials, den Kartenkörper und das Verfahren zur Herstellung eines Kartenkörpers mit den Merkmalen, wie sie in den jeweiligen unabhängigen Ansprüchen angegeben sind. Spezielle Ausführungsformen der vorliegenden Erfindung sind in den abhängigen Ansprüchen angegeben.

Erfindungsgemäß wird ein Folienverbundmaterial bereitgestellt, das mindestens drei, bevorzugt fünf, und gegebenenfalls mehr als fünf Schichten aufweist, d.h. mindestens eine Innenschicht und eine erste und eine zweite Außenschicht, die die Innenschicht an ihren beiden Oberflächen bedecken. Die Schichten bestehen jeweils aus einem Kunststoffmaterial, d.h. aus Kunststoff, der gegebenenfalls mit üblichen Additiven versetzt ist. Der Kunststoff der ersten und der zweiten Außenschicht ist jeweils ein thermoplastisches Polymer oder ein Gemisch aus thermoplastischen Polymeren. Der Kunststoff der mindestens einen Innenschicht ist ein Gemisch aus mindestens einem thermoplastischen Elastomer und mindestens einem thermoplastischen Polymer. Ein derartiges Folienverbundmaterial vereinigt die vorteilhaften Elastizitätseigenschaften des Elastomers mit den vorteilhaften Eigenschaften des Thermoplasten, beispielsweise hinsichtlich Laminierbarkeit und Handhabbarkeit. Die Herstellung eines solchen Verbundmaterials wirft technische Probleme auf, da die verwendbaren Materialien sorgfältig aufeinander abgestimmt werden müssen, um die gewünschten Folieneigenschaften zu erzielen. Eine wichtige Rolle spielt auch die Wahl der jeweiligen Schichtdicken, der geeigneten Prozessparameter und Extruderkonfigurationen, und die passende Zusammenstellung der Rezepturen.

Die Kunststoff-Innenschicht des Folienverbundmaterials besteht bevorzugt aus mehr als einer Schicht, besonders bevorzugt aus drei Teilschichten, einer inneren Kunststoff-Innenschicht und zwei äußeren Kunststoff-Innenschichten. Der Grund für diesen Aufbau aus mehreren Teilschichten liegt in erster Linie darin, dass die optimalen Extrusionstemperaturen und Schmelzeviskositäten von Thermoplasten und thermoplastischen Elastomeren relativ weit auseinander liegen. Eine Extrusion eines Folienverbundmaterials mit einer Innenschicht aus mindestens einem thermoplastischen Elastomer und Außenschichten aus mindestens einem Thermoplasten ist daher technisch sehr schwierig und liefert typischerweise keine guten und reproduzierbaren Folienqualitäten. Erfindungsgemäß werden die Schmelzeviskositäten und Extrusionstemperaturen der die einzelnen Schichten bildenden Materialien durch Abmischungen stufenweise aneinander angeglichen. Dadurch können Extruder, die die jeweils benachbarten Schichten des herzustellenden Folienverbundmaterials extrudieren, mit ähnlichen bzw. stufenweise angeglichenen Prozessparametern betrieben werden, was wiederum eine bessere, homogenere Überlagerung der Schmelzeschichten und eines verbesserte Haftfestigkeit der Schichten aneinander bewirkt.

Die beiden Kunststoff-Außenschichten können gleich oder verschieden sein. Typischerweise bestehen die Kunststoff-Außenschichten des Folienverbundmaterials aus denselben Materialien und weisen dieselbe Dicke auf, d.h. das Folienverbundmaterial ist hinsichtlich seiner Außenschichten symmetrisch. Dies ist jedoch nicht zwingend, d.h. die Außenschichten können sich sowohl hinsichtlich ihrer Kunststoffe, als auch hinsichtlich ihrer Dicken, als auch hinsichtlich eventueller Additive unterscheiden.

Die Kunststoff-Innenschicht besteht aus einem Gemisch aus mindestens einem thermoplastischen Elastomer und mindestens einem Thermoplasten, wobei, um eine passende Abstufung der Eigenschaften benachbarter Schichten zu erzielen, der Thermoplast bevorzugt derselbe Thermoplast ist, der in der benachbarten Außenschicht verwendet wurde. Zumindest im Falle von nur einer einzigen Kunststoff-Innenschicht ist es daher sehr vorteilhaft, für die beiden Kunststoff-Außenschichten jeweils dasselbe thermoplastische Material zu verwenden.

Wenn die Kunststoff-Innenschicht des Folienverbundmaterials aus mehreren Teilschichten aufgebaut ist, enthält jede der Teilschichten jeweils ein Gemisch aus mindestens einem thermoplastischen Elastomer und mindestens einem Thermoplasten, wobei der Anteil an dem thermoplastischen Elastomer umso höher ist, je weiter innen in dem Folienverbundmaterial die jeweilige Teilschicht liegt. Im Sinne einer Erzielung guter Folienqualitäten und einer guten Haftfestigkeit der Schichten aneinander ist es bevorzugt, für alle Teilschichten der Innenschicht dasselbe thermoplastische Elastomer bzw. Gemisch von thermoplastischen Elastomeren zu verwenden. Gleichermaßen ist es bevorzugt, für alle Teilschichten der Innenschicht dasselbe thermoplastische Polymer bzw. Gemisch von thermoplastischen Polymeren zu verwenden. Falls die erste Kunststoff-Außenschicht und die zweite Kunststoff-Außenschicht verschiedene thermoplastische Polymere enthalten, ist es bevorzugt, eine schrittweise Angleichung der Zusammensetzung nach innen vorzunehmen. Für ein Folienverbundmaterial mit einer Innenschicht aus drei Teilschichten würde dies bedeuten, dass die erste äußere Kunststoff-Innenschicht bevorzugt denselben Thermoplasten enthält wie die erste Kunststoff-Außenschicht, und die zweite äußere Kunststoff-Innenschicht bevorzugt denselben Thermoplasten enthält wie die zweite Kunststoff-Außenschicht. Die innere Kunststoff-Innenschicht würde dann bevorzugt sowohl den Thermoplasten der ersten Kunststoff-Außenschicht als auch den Thermoplasten der zweiten Kunststoff-Außenschicht enthalten.

Die Teilschichten einer Kunststoff-Innenschicht weisen zwar bevorzugt dieselben Typen von thermoplastischen Elastomer und Thermoplast auf, können sich jedoch ohne weiteres hinsichtlich ihrer Dicken und ihrer Zusatzstoffe unterscheiden. Bei einer Innenschicht aus drei Teilschichten ist bevorzugt die innerste Schicht die dickste Teilschicht. Typischerweise ist das Folienverbundmaterial bezüglich seiner Innenschichten symmetrisch. Derartige Materialien können am einfachsten hergestellt werden.

Die thermoplastischen Elastomere und Thermoplasten müssen miteinander verträglich und gut miteinander mischbar sein. Außerdem sollten ihre Extrusionstemperaturen und Schmelzeviskositäten so ähnlich wie möglich sein. Als Kunststoff für die Außenschichten ist es bevorzugt, Polyester (bevorzugt PETG), Polycarbonat oder Blends aus Polyester und Polycarbonat zu verwenden. Als thermoplastisches Elastomer für die Innenschicht bzw. die Innenschichten sind thermoplastische Urethan-Elastomere, insbesondere thermoplastische Urethan-Elastomere auf der Basis von aromatischen Estern oder Ethern, bevorzugt. Aliphatische thermoplastische Elastomere auf Urethanbasis haben zwar den Vorteil, UV-stabil zu sein, sind aber mit den bevorzugten Thermoplasten kaum durch Coextrusion zu verarbeiten. Reproduzierbare Folienqualitäten sind nur schwer zu erhalten. Die aromatischen Typen haben zwar den Nachteil einer geringen UV-Stabilität, aber dieser Nachteil kann durch Zugabe von UV-Stabilisatoren, wie sie auf dem Markt gängig sind, leicht behoben werden. Zur stufenweisen Angleichung der Eigenschaften weist jede Innenschicht eine Zumischung eines Thermoplasten auf, bevorzugt des Thermoplasten der angrenzenden Außenschicht.

Thermoplastische Elastomere gibt es mit verschiedenen Shore D-Härten, wobei die jeweilige Härte auf den Thermoplasten der angrenzenden bzw. nächstliegenden Außenschicht abgestimmt sein sollte. Wenn die Thermoplasten Polyester sind, wird als thermoplastische Elastomer bevorzugt ein thermoplastisches Elastomer mit einer Shore D-Härte von 35 bis 50 verwendet, und wenn der Thermoplast ein Polycarbonat ist, wird als Elastomer bevorzugt ein Elastomer mit einer Shore D-Härte im Bereich von 40 bis 70, insbesondere zwischen 50 und 65, verwendet. Ferner sollten die thermoplastischen Elastomere möglichst viele der folgenden Eigenschaften aufweisen: sie sollten eine Reißdehnung zwischen 300% und 700%, insbesondere zwischen 350% und 500%, haben; sie sollten eine Schmelzeviskosität in Abhängigkeit von der Schmelzetemperatur besitzen, und bevorzugt einen MFI von 7 bis 11 cm³/10 min haben; ihre Verarbeitungstemperaturen sollten zwischen 190°C und 240°C, insbesondere zwischen 210°C und 240°C ,liegen; sie sollten hydrolysebeständig sein; sie sollten eine Affinität zu den für die Außenschichten verwendeten Thermoplasten besitzen, insbesondere zu Polyestern und/oder Polycarbonaten.

Das erfindungsgemäße Folienverbundmaterial kann in transparenten, farbigen oder farblosen, und opaken Ausführungsformen hergestellt werden. Opake Ausführungsformen enthalten neben den Kunststoff-Komponenten, und gegebenenfalls sonstigen Additiven, Füllstoffe wie beispielsweise Titandioxid (Weiß) und Ruß (Schwarz). Auch Buntpigmente wie diverse Metalloxide können enthalten sein. Beispielsweise enthalten opake Ausführungsformen als Füllstoff als Weißpigment TiO2BaSO4. Insbesondere bei verstreckten Folien kann die Opazität auch durch Vakuoolen erzeugt werden.

Wird das Folienverbundmaterial als eine Außenschicht eines Kartenkörpers verwendet, ist es bevorzugt transparent. Bevorzugte Kunststoff-Zusammensetzungen (ohne Berücksichtigung von Additiven) für ein fünfschichtiges transparentes Folienverbundmaterial sind jeweils 0% thermoplastisches Elastomer und 100% Thermoplast für die erste und die zweite Außenschicht, jeweils 20% bis 50% thermoplastisches Elastomer und 80% bis 50% Thermoplast für die erste und die zweite äußere Innenschicht, und 30% bis 70%, bevorzugt 50% bis 70%, thermoplastisches Elastomer und 70% bis 30%, bevorzugt 50% bis 30%, Thermoplast für die innere Innenschicht.

Wird das erfindungsgemäße Folienverbundmaterial im Inneren eines Kartenaufbaus verwendet, ist es bevorzugt opak. Bevorzugte Zusammensetzungen (unter Berücksichtigung von Kunststoffen und Füllstoffen) für ein fünfschichtiges opakes Folienverbundmaterial sind: jeweils 0% Elastomer, 85% bis 95% Thermoplast und 5% bis 15% Füllstoff für die erste und die zweite Außenschicht; jeweils 20% bis 50% Elastomer, 75% bis 35% Thermoplast und 5% bis 15% Füllstoff für die erste und die zweite äußere Innenschicht, und 50% bis 70% thermoplastisches Elastomer, 45% bis 15% Thermoplast und 5% bis 15% Füllstoff für die innere Innenschicht.

Die Angaben sind in Gewichtsprozent, etwaige Additive wie UV-Stabilisatoren, Farbstoffe, Laseradditive etc. sind dabei nicht berücksichtigt.

Das erfindungsgemäße Folienverbundmaterial kann auch mehr als drei Teilschichten aus Elastomer-Thermoplast-Gemischen aufweisen. Unabhängig von der exakten Zusammensetzung und der Art der verwendeten Thermoplasten und Elastomere ist es stets wesentlich, dass der Gehalt an thermoplastischem Elastomer in einer inneren Teilschicht mindestens so hoch, und bevorzugt höher, als der Gehalt an thermoplastischem Elastomer in der angrenzenden äußeren Teilschicht ist.

Neben den Kunststoffen selbst können die Materialien für die einzelnen Schichten die gängigen Additive enthalten, beispielsweise die bereits genannten Füllstoffe und UV-Stabilisatoren, oder auch Farbpigmente, Flammhemmstoffe, optische Aufheller, Oxidationsstabilisatoren und Laseradditive. Der Zusatz von Hilfsstoffen wird bevorzugt gering gehalten, um die Abstimmung der Kunststoffmaterialien aufeinander möglichst wenig zu stören. Die jeweiligen Außenschichten des Folienverbundmaterials können auch einen Zusatz an Antiblockmitteln enthalten.

Die Gesamtdicke des erfindungsgemäßen Folienverbundmaterials liegt typischerweise zwischen 50 µm und 350 µm, wobei die Dicke variiert, je nachdem, an welcher Stelle der Schichtfolge eines Kartenkörpers das Folienverbundmaterial vorgesehen werden soll. Wird das Folienverbundmaterial als eine innere Schicht, d.h. als ein Teil des Kernschichtaufbaus, verwendet, sind Gesamtschichtdicken im Bereich von etwa 150 µm bis 350 µm, beispielsweise 240 µm, bevorzugt. Wird das Folienverbundmaterial als Deckschicht verwendet, sind Gesamtschichtdicken im Bereich von etwa 80 µm bis 130 µm, beispielsweise 105 µm, bevorzugt. Dabei entfallen, wenn die Gesamtschichtdicke als 100% bezeichnet wird, jeweils etwa 10% bis 30% auf die erste und die zweite Kunststoff-Außenschicht, und dementsprechend etwa 80% bis 40% auf die Kunststoff-Innenschicht. Eine besonders bevorzugte Schichtdicken-Verteilung ist, mit einer Abweichung von jeweils etwa ± 3%, jeweils 10% für die erste und die zweite Kunststoff-Außenschicht, jeweils 20% für die erste und die zweite äußere Kunststoff-Innenschicht, und 40% für die innere Kunststoff-Innenschicht.

Die Herstellung des erfindungsgemäßen Folienverbundmaterials erfolgt durch Coextrusion. Dabei werden die für die einzelnen Schichten des erfindungsgemäßen Folienverbundmaterials vorgesehenen Kunststoffmaterialien, gegebenenfalls unter Zusatz der entsprechenden Additive, jeweils in geeigneten Extrudern geschmolzen und die Schmelze einem Feedblock oder einer Breitschlitzdüse zugeführt. Die Folienmaterialien werden im Feedblock oder der Breitschlitzdüse vor dem Austritt so zusammengeführt, dass die Schichtfolge des vorstehend beschriebenen Folienverbundmaterials entsteht. Bei der Herstellung ist insbesondere zu beachten:
Die thermoplastischen Elastomere, insbesondere die bevorzugten thermoplastischen Elastomere auf Urethanbasis, sind hygroskopisch. Die Elastomere müssen daher vor der Verarbeitung gut vorgetrocknet werden, d.h. die Restfeuchte sollte unter 0,05% liegen, da es sonst zu einem Abbau durch Hydrolyse während des Verarbeitungsprozesses im Extruder kommen kann.

Die thermoplastischen Elastomere werden bei erhöhen Temperaturen thermisch abgebaut. Daher muss ihre Verweilzeit in den Extrudern möglichst kurz gehalten werden, d.h. für eine kontinuierliche Förderung der Schmelze ohne Unterbrechung gesorgt werden.

Die Folienverbundmaterialien müssen eine Mindestgesamtmenge an thermoplastischem Elastomer enthalten, damit die Folie eine ausreichende Elastizität besitzt, um später im Aufbau eines Kartenkörpers die auftretenden Spannungen und mechanischen Belastungen ausgleichen zu können. Typischerweise sind etwa 40% thermoplastisches Elastomer erforderlich, aber je nach Kartenaufbau und thermoplastischem Elastomer kann der Wert niedriger oder höher sein. Es müssen Extruderkonfigurationen vorgesehen werden, die in der Lage sind, kontinuierlich die entsprechenden Schichtdicken zu fördern. In der Regel ist es vorteilhaft, die Schichtdicken der Schichten mit thermoplastischem Elastomer so groß wie möglich zu machen, und den Anteil an thermoplastischem Elastomer an den jeweiligen Schichten ebenfalls so groß wie möglich zu machen.

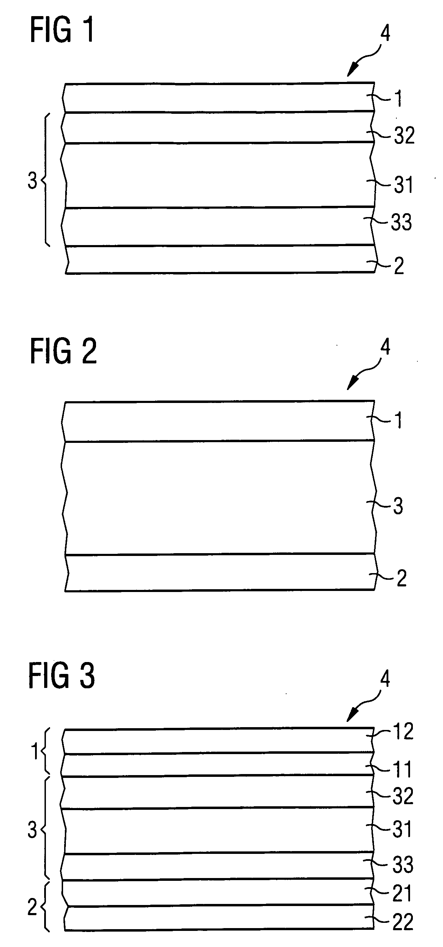

Thermoplaste und thermoplastische Elastomere (insbesondere die bevorzugten thermoplastischen Polyester und thermoplastischen Elastomere auf Urethanbasis) haben relativ weit auseinander liegende optimale Extrusionstemperaturen und Schmelzeviskositäten. Die Rezepturen müssen daher so eingestellt werden, dass durch die Abmischungen von Thermoplasten und thermoplastischen Elastomeren die Extrusionstemperaturen und die Schmelzeviskositäten benachbarter Schichten angeglichen werden, so dass eine homogene Überlagerung der Schmelzeschichten gewährleistet ist. Beispielhafte Rezepturen wurden bereits weiter oben angegeben. Beispielhafte Verarbeitungsparameter werden bei Figur 1 angegeben.

Bei einem fünfschichtigen Folienverbundmaterial erfolgt die Extrusion (Temperatur der Extrusionsdüse bzw. die Schmelzetemperaturen der einzelnen Schmelzeströme) der ersten und der zweiten Kunststoff-Außenschicht bevorzugt bei 200 bis 280°C, besonders bevorzugt bei 210 bis 260°C, die Extrusion der ersten und der zweiten äußeren Kunststoff-Innenschicht bevorzugt bei einer Temperatur von 200 bis 270°C, besonders bevorzugt bei 210 bis 260°C, und die Extrusion der inneren Kunststoff-Innenschicht bevorzugt bei 190 bis 270°C, besonders bevorzugt bei 220 bis 250°C.

Bei dem erfindungsgemäßen Folienverbundmaterial werden hervorragende Verbundwerte der Schichten untereinander erreicht, d.h. die Haftfestigkeit der Schichten aneinander beträgt typischerweise mindestens 30 N/cm.

Das erfindungsgemäße Folienverbundmaterial ist insbesondere dazu geeignet, als Schicht im Schichtaufbau eines Kartenkörpers verwendet zu werden, um die mechanischen Eigenschaften des Kartenkörpers zu verbessern.

Kartenkörper, insbesondere Kartenkörper für Chipkarten und andere Datenträger, bestehen typischerweise aus einer Vielzahl von Schichten, die miteinander durch Laminieren verbunden sind. Die einzelnen Schichten bestehen meist aus thermoplastischen Polymermaterialien, wie Polyvinylchlorid, Polycarbonat oder Polyethylenterephthalat. Zwischen den Schichten bzw. in Aussparungen der Schichten können sich elektronische Bauteile und aufgedruckte Antennen befinden. Als mindestens eine der Schichten des Kartenkörpers wird dabei ein erfindungsgemäßes Folienverbundmaterial verwendet. Insbesondere wird das erfindungsgemäße Folienverbundmaterial als eine oder als beide Deckschichten (Overlay-Folie) des Kartenkörpers eingesetzt. Alternativ oder zusätzlich kann das erfindungsgemäße Folienverbundmaterial innerhalb des Kartenaufbaus (Inlett-Folie) vorgesehen werden, also eine Kernschicht bilden.

Zur Herstellung des Kartenkörpers werden die Kunststofffolien, die den späteren Kartenkörper bilden sollen, miteinander laminiert. Das Laminieren kann in einem einzigen Arbeitsgang erfolgen, d.h. es werden alle Folienmaterialien, die den Kartenkörper bilden sollen, gestapelt und in einem Arbeitsgang laminiert. Alternativ kann das Laminieren in zwei oder mehr Arbeitsgängen durchgeführt werden, das heißt es wird nur jeweils ein Teil der Folien gemeinsam zu einem Teilstapel laminiert, und die Teilstapel dann später in einem weiteren Arbeitsgang zu dem Kartenkörper gestapelt und laminiert. Ein guter Laminatverbund wird dabei durch ein Laminieren bei einer Temperatur zwischen 120°C und 200°C erreicht, insbesondere zwischen 130°C und 180°C, bevorzugt zwischen 140°C und 160°C.

Vorzugsweise wird das Laminieren in einer Heizstation und einer Kühlstation durchgeführt, wobei der Druck in der Heizstation und der Druck in der Kühlstation geeignet gewählt wird. Die Laminierzeit liegt in der Heiz- und/oder Kühlstation vorzugsweise jeweils zwischen 10 Minuten und 25 Minuten.

Die erfindungsgemäßen Kartenkörper haben typischerweise Gesamtdicken im Bereich von etwa 0,5 bis 1,0 mm. Die Gesamtdicke des erfindungsgemäßen Folienverbundmaterials liegt in der Regel zwischen 80 µm und 350 µm, je nach dem, an welcher Stelle des Schichtverbunds des Kartenkörpers das Folienverbundmaterial eingesetzt werden soll. Inlett-Folien sind für gewöhnlich dicker als Overlay-Folien, wobei die Gesamtdicke für Inlett-Folien typischerweise im Bereich von 150 µm bis 350 µm liegt, und die Gesamtdicke für Overlay-Folien typischerweise im Bereich von 80 µm bis 130 µm liegt. Die erfindungsgemäßen Folienverbundmaterialien verschmelzen dank ihrer Außenschichten aus thermoplastischem Kunststoff sehr gut mit benachbarten Schichten des Kartenkörper-Schichtaufbaus, so dass ein stabiler Kartenkörper-Laminatverbund erhalten wird. Gleichzeitig sorgen die Außenschichten aus Thermoplast, wenn das erfindungsgemäße Folienverbundmaterial als Overlay-Folie verwendet wird oder wenn beispielsweise eine erfindungsgemäße Folie als Kernfolie eingesetzt wird, dafür, dass die Kartenkörper problemlos bedruckt und gehandhabt werden können, und nicht zu einem Verblocken neigen.

Die Erfindung wird nachfolgend anhand von Figuren noch weiter veranschaulicht. Es wird darauf hingewiesen, dass die Figuren nicht maßstabsgetreu und nicht proportionsgetreu sind. Außerdem wird darauf hingewiesen, dass die Figuren die Erfindung lediglich näher erläutern sollen und in keiner Weise beschränkend zu verstehen sind. Gleiche Bezugsziffern bezeichnen gleiche Elemente.

Es zeigen:
- Figur 1: einen Schnitt durch ein Folienverbundmaterial mit einer Kunststoff-Innenschicht, die aus einer inneren Innenschicht und zwei äußeren Innenschichten besteht, einer ersten Kunststoff-Außenschicht und einer zweiten KunststoffAußenschicht,
- Figur 2: einen Schnitt durch ein Folienverbundmaterial mit einer Kunststoff-Innenschicht, einer ersten KunststoffAußenschicht und einer zweiten Kunststoff-Außenschicht,
- Figur 3: einen Schnitt durch ein Folienverbundmaterial mit einer Kunststoff-Innenschicht, die aus einer inneren Innenschicht und zwei äußeren Innenschichten besteht, sowie mit zwei ersten Kunststoff-Außenschichten und zwei zweiten KunststoffAußenschichten,
- Figur 4: einen Schnitt durch einen Kartenkörper mit zwei Folienverbundmaterialien als Deckschichten und mit Chipmodul,
- Figur 5: einen Schnitt durch einen Kartenkörper mit zwei Folienverbundmaterialien als Teilschichten des Kartenkerns und mit Chipmodul, und
- Figur 6: einen Schnitt durch einen Kartenkörper mit zwei Folienverbundmaterialien als Deckschichten, sowie zwei Folienverbundmaterialien als Teilschichten des Kartenkerns, und mit Chipmodul.

Fig. 1 zeigt eine erste Ausführungsform eines Folienverbundmaterials 4 im Schnitt. Bei dieser Ausführungsform besteht die Kunststoff-Innenschicht aus einer inneren Teilschicht 31, einer ersten äußeren Teilschicht 32 und einer zweiten äußeren Teilschicht 33. Darauf befinden sich eine erste Kunststoff-Außenschicht 1 und eine zweite Kunststoff-Außenschicht 2. Diese Kunststoff-Außenschichten enthalten als die Kunststoffkomponente (neben gegebenenfalls vorhandenen Additiven) ein thermoplastisches Polymer oder ein Gemisch von thermoplastischen Polymeren. Die Innenschichten 31, 32, 33 enthalten als die Kunststoffkomponente (neben gegebenenfalls vorhandenen Additiven) jeweils ein Gemisch aus mindestens einem thermoplastischen Elastomer und mindestens einem thermoplastischen Polymer. Die innere Innenschicht 31 hat einen höheren Gehalt an thermoplastischem Elastomer als die äußeren Innenschichten 32, 33. In der Innenschicht 3 bzw. den Teilschichten 31, 32, 33 wird dasselbe thermoplastische Polymer oder Gemisch von thermoplastischen Polymeren verwendet wie in den Außenschichten 1, 2. Durch die Abstufung in den Zusammensetzungen der Schichten von reinem Thermoplasten außen bis zu einem Gemisch mit einem hohen Elastomeranteil in der innersten Schicht, sind jeweils benachbarte Schichten einander relativ ähnlich bzw. einander angeglichen, und bei der Extrusion kann eine homogene Überlagerung der Schmelzeschichten und eine gute Haftung der einzelnen Teilschichten aneinander erreicht werden.

Die Herstellung des Folienverbundmaterials 4 kann beispielsweise erfolgen, indem Granulate mit drei verschiedenen Zusammensetzungen bzw. Abmischungen (Granulat A für die erste und die zweite Kunststoff-Außenschicht 1, 2; Granulat B für die erste und die zweite äußere Kunststoff-Innenschicht 32, 33; Granulat C für die innere Kunststoff-Innenschicht 31) in drei Extrudern A, B, C geschmolzen werden, und die entsprechenden Schmelzeströme (Material A aus Extruder A, Material B aus Extruder B, Material C aus Extruder C) jeweils durch eine Breitschlitzdüse extrudiert und zu dem dargestellten Schichtaufbau zusammengeführt werden. Alternativ besteht die Möglichkeit, daß die Schichten im Feedblock vor dem Extrudieren durch die Breitschlitzdüse zusammengeführt werden. Ferner besteht die alternative Möglichkeit, daß die Schichten erst in der Breitschlitzdüse, einer sogenannten Mehrkanaldüse, selbst, vor dem Schmelzeaustritt zusammengeführt werden. In der dargestellten Ausführungsform ist das Folienverbundmaterial symmetrisch im Aufbau, d.h. die Außenschichten 1, 2 und die Teilschichten der Innenschicht 32, 33 haben jeweils die gleiche Zusammensetzung und die gleiche Dicke. Dies ist jedoch nicht zwingend. Bei unsymmetrischen Folienverbundmaterialien sind zur Herstellung entsprechend mehr Extruder erforderlich und eine andere entsprechende Feedblockkonstellation.

Nachfolgend sind konkrete, allerdings nicht erfindungsgemäße Beispielrezepturen für ein transparentes Folienverbundmaterial und ein opakes Folienverbundmaterial angegeben.

Transparente Folie, Materialstärke 105 bis 110 µm, Schichtdicken-Verhältnis 1/32/31/33/2 = 10/20/40/20/10:

| | |
|---|---|
| Schichten 1, 2: | 4% S462 + 4% S465 + 92% PETG |
| Schichten 32, 33: | 4% S465 + 32% 9665 DU + 64% PETG |
| Schicht 31: | 4% S465 + 65% 9665 DU + 31% PETG |

Opake Folie, Materialstärke 120 µm, Schichtdicken-Verhältnis 1/32/31/33/2 = 10/20/40/20/10:

| | |
|---|---|
| Schichten 1, 2: | 20% S469-YE + 80% PETG |
| Schichten 32, 33: | 55% PETG + 25% DP 9665 DU + 20% S469-YE |
| Schicht 31: | 30% PETG + 50% DP 9665 DU + 20% S469-YE |

Desmopan 9665 DU, der Firma Bayer Material Science, ist ein thermoplastisches Elastomer auf Urethanbasis (Ethertype) mit einer Shore D-Härte von 75 (Shore A-Härte 98) und einer Reißdehnung von 350% (Folie M5e). Es ist UV-stabilisiert, mikroben- und hydrolysebeständig.
S469-YE der Firma Sukano ist ein Weiß-Additiv.
S462 der Firma Sukano ist ein Antiblockmittel.
S465 der Firma Sukano ist ein Laseradditiv.

Nachfolgend sind beispielhafte Extrudereinstellungen zur Herstellung des Folienverbundmaterials 4 angegeben.

**Verarbeitungsparameter:**

| bevorzugte Verarbeitungstemperaturen Extruder C | | | | |
|---|---|---|---|---|
| Zone 1 | Zone 2 | Zone 3 bis n | Schmelzeleitungen, -pumpe, -filter | Feedblock/ Düse |
| 30°C - | 180°C - | 190°C - | 190°C - | 190°C - |
| 80°C | 270°C | 270°C | 270°C | 270°C |

| besonders bevorzugte Verarbeitungstemperaturen Extruder C | | | | |
|---|---|---|---|---|
| Zone 1 | Zone 2 | Zone 3 bis n | Schmelzeleitungen, -pumpe, -filter | Feedblock/ Düse |
| 40°C - | 200°C - | 210°C - | 210°C - | 220°C - |
| 70°C | 250°C | 250°C | 250°C | 250°C |

| bevorzugte Verarbeitungstemperaturen Extruder B | | | | |
|---|---|---|---|---|
| Zone 1 | Zone 2 | Zone 3 bis n | Schmelzeleitungen, -pumpe, -filter | Feedblock/ Düse |
| 30°C - | 190°C - | 200°C - | 200°C - | 200°C - |
| 70°C | 270°C | 270°C | 270°C | 270°C |

| besonders bevorzugte Verarbeitungstemperaturen Extruder B | | | | |
|---|---|---|---|---|
| Zone 1 | Zone 2 | Zone 3 bis n | Schmelzeleitungen, -pumpe, -filter | Feedblock/ Düse |
| 40°C - | 200°C - | 210°C - | 210°C - | 210°C - |
| 60°C | 260°C | 260°C | 260°C | 260°C |

| bevorzugte Verarbeitungstemperaturen Extruder A | | | | |
|---|---|---|---|---|
| Zone 1 | Zone 2 | Zone 3 bis n | Schmelzeleitungen, -pumpe, -filter | Feedblock/ Düse |
| 30°C - | 200°C - | 200°C - | 200°C - | 200°C - |
| 70°C | 280°C | 280°C | 280°C | 280°C |

| besonders bevorzugte Verarbeitungstemperaturen Extruder A | | | | |
|---|---|---|---|---|
| Zone 1 | Zone 2 | Zone 3 bis n | Schmelzeleitungen, -pumpe, -filter | Feedblock/ Düse |
| 40°C - | 210°C - | 210°C - | 210°C - | 210°C - |
| 60°C | 260°C | 260°C | 260°C | 260°C |

Die jeweils günstigen Extrudereinstellungen können in Abhängigkeit von den eingesetzten Extrudern (Durchsatz, Schneckengeometrien) variieren. Sie stellen Angaben zur Orientierung dar, die ein Fachmann gegebenenfalls durch wenige Routineversuche an die vorgegebenen Extruderkonfigurationen anpassen kann.

Fig. 2 zeigt eine andere Ausführungsform des Folienverbundmaterials 4. Diese Ausführungsform hat den einfachsten Schichtaufbau mit einer einzigen Innenschicht 3 und zwei Außenschichten 1, 2. Die Außenschichten 1, 2 bestehen wiederum aus einem thermoplastischen Polymer oder einem Gemisch von thermoplastischen Polymeren. Wie bei allen Ausführungsformen sind Polyester, Polyestergemische, insbesondere PETG, Polycarbonat, Polycarbonat-Gemische und Blends aus Polyester und Polycarbonat bevorzugte thermoplastische Polymere. Die Innenschicht 3 besteht aus einem Gemisch aus mindestens einem thermoplastischen Elastomer, bevorzugt einem Elastomer auf Urethanbasis, mit einem Anteil an thermoplastischem Polymer. Das für die Innenschicht 3 verwendete thermoplastische Polymer ist identisch mit dem thermoplastischen Polymer oder PolymerGemisch, das für die Außenschichten 1, 2 verwendet wird. Für alle Ausführungsformen des Folienverbundmaterials sind Urethan-Elastomere auf der Basis von aromatischen Estern oder aromatischen Ethern wegen ihrer besonderen Eignung zur Coextrusion mit Thermoplasten besonders bevorzugt. Ganz besonders bevorzugt sind sie für ein nur dreischichtiges Folienverbundmaterial, wie in Fig. 2 dargestellt, da bei nur einer einzigen Innenschicht weniger Abstufungsmöglichkeiten als beispielsweise bei einer dreischichtigen Innenschicht, wie in Fig. 1 dargestellt, bestehen. Es ist daher schwieriger, verträgliche Übergänge zwischen den einzelnen Schichten zu schaffen.

Fig. 3 zeigt eine weitere Ausführungsform des Folienverbundmaterials 4, bei der die Innenschicht 3 wie bei dem in Fig. 1 dargestellten Folienverbundmaterial aufgebaut ist, aber die erste Außenschicht 1 und die zweite Außenschicht 2 jeweils aus einer äußeren Außenschicht 12, 22 und einer inneren Außenschicht 11, 21 aufgebaut sind. Das Folienverbundmaterial weist also insgesamt sieben Schichten auf. Grundsätzlich gilt, dass die Herstellung des Folienverbundmaterials umso schwieriger wird, je mehr Schichten das Folienverbundmaterial aufweist. Daher sind Varianten mit Außenschichten 1, 2, die aus mehreren Teilschichten aufgebaut sind, weniger bevorzugt. Sie sind vor allem dann sinnvoll, wenn in eine äußere Teilschicht 12, 22 ein Bestandteil eingebracht werden soll, der mit einem Bestandteil der Innenschicht 3 unverträglich ist, oder wenn beispielsweise eine separate Teilschicht mit einem Antiblockmittel ausgestattet werden soll. Die entsprechenden Zusätze sind dann nur in der äußeren ersten Außenschicht 12 und/oder der äußeren zweiten Außenschicht 22 vorhanden.

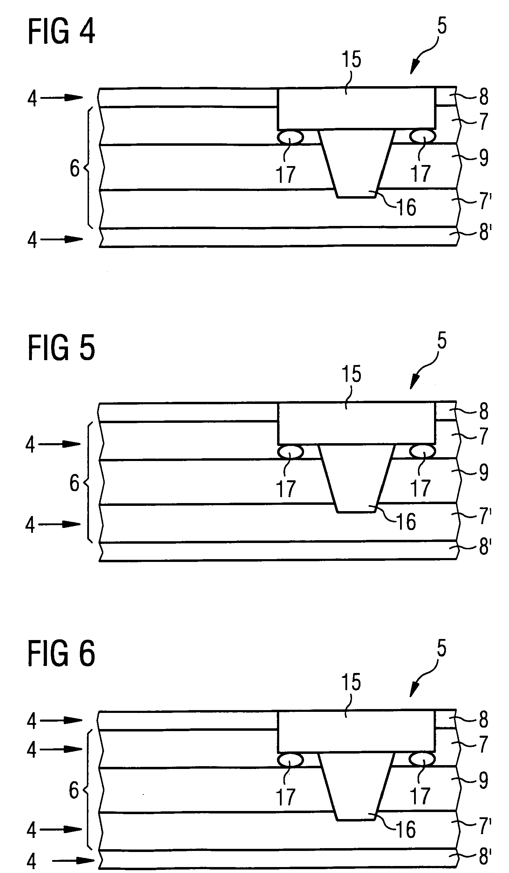

Die Figuren 4, 5 und 6 zeigen jeweils beispielhafte Schichtaufbauten für Kartenkörper 5. Allgemein bestehen die Kartenkörper 5 aus einem Kartenkern 6, der typischerweise aus ein bis sieben Schichten aufgebaut ist. In den Figuren sind jeweils drei Kernschichten, eine Kerninnenschicht 9, eine erste Kernaußenschicht 7 und eine zweite Kernaußenschicht 7', dargestellt. Bei Kartenkörpern des Stands der Technik bestehen die Kartenkerne aus thermoplastischen Folien, typischerweise aus PVC, PET, ABS, Polyester, PC, PEC und dergleichen. Derartige Folien können auch für die Kartenkerne 6 verwendet werden. Zwischen den Folienschichten und/oder in Aussparungen der Folienschichten können sich elektronische Bauteile wie elektronische Module und Antennen befinden. Auch andere Merkmale, wie beispielsweise Sicherheitselemente oder Aufdrucke, können vorgesehen werden. Der Schichtaufbau der Kartenkörper 5 wird jeweils außenseitig durch eine Deckschicht 8, 8' abgeschlossen. Die den Schichtaufbau bildenden Folien werden bevorzugt durch Laminieren miteinander verbunden, weshalb alle verwendeten Materialien gut miteinander laminierbar sein sollten.

Fig. 4 zeigt eine Ausführungsform eines Kartenkörpers 5 mit einem Kartenkern 6, bestehend aus einer PVC- oder PET-Folie 9, auf die eine Spule (nicht gezeigt) aufgedruckt ist, und zwei PVC-Folien 7, 7'. Der Schichtaufbau wird abgeschlossen durch die beiden Deckfolien 8, 8', die aus dem Folienverbundmaterial 4, wie es vorstehend beschrieben wurde, bestehen.

In Ausnehmungen der Folien 7, 8 befindet sich ein Chipmodul 15, das mittels einer Modulauflage 16 aus Modulkleber mit dem Kartenkörper verklebt ist. Kontakte 17 stellen den elektrischen Kontakt zu der auf die Folie 9 aufgedruckten Spule (nicht gezeigt) her.

Wenn das Folienverbundmaterial 4, wie in Fig. 4 dargestellt, als Deckschicht (Overlay-Folie) verwendet wird, ist es bevorzugt transparent. Die Verwendung des Folienverbundmaterials 4 ausschließlich als Deckschicht hat den Vorteil, dass die Verklebung des Chipmoduls 15 ausschließlich mit Standard-Kartenfolien erfolgt, so dass weiterhin der übliche Standard-Modulkleber für die Modulauflage 16 verwendet werden kann.

Fig. 5 zeigt eine andere Ausführungsform eines Kartenkörpers 5. Hier besteht der Kartenkern 6 aus einer PVC- oder PET-Folie 9 mit einer aufgedruckten Antennenspule (nicht gezeigt), an die sich beidseitig die Schichten 7, 7' aus dem Folienverbundmaterial 4 anschließen. Der Schichtaufbau wird abgeschlossen durch die beiden Deckschichten 8, 8' aus PVC-Folie. Wie bei der in Fig. 4 dargestellten Ausführungsform ist ein Chipmodul 15 mittels einer Modulauflage 16 in den Kartenkörper 5 eingeklebt und weist Kontakte 17 zur Kontaktierung der Antennenspule auf.

Wenn das Folienverbundmaterial 4, wie in der in Fig. 5 dargestellten Ausführungsform, eine Teilschicht bzw. Teilschichten des Kerns 6 bildet, wird es bevorzugt opak ausgeführt. Diese Ausführungsform hat den Vorteil, dass das Folienverbundmaterial 4, da es sich im Verklebungsbereich des Chipmoduls befindet, Spannungen, die beim Implantieren des Moduls durch die Temperatureinwirkung (Hotmelt-Verklebung) im Material aufgebaut werden, besonders gut ausgleichen kann.

Eine weitere alternative Ausführungsform eines Kartenkörpers 5 ist in Fig. 6 dargestellt. Hier besteht der Kartenkern 6 aus der Kerninnenschicht 9 aus PVC- oder PET-Folie, der ersten Kernaußenschicht 7 und der zweiten Kernaußenschicht 7', beide aus Folienverbundmaterial 4 in opaker Ausführung. Die beiden Deckschichten 8, 8' bestehen ebenfalls aus Folienverbundmaterial 4, diesmal in transparenter Ausführung. Ein Chipmodul 15 ist wie bei den Ausführungsformen von Fig. 4 und Fig. 5 in den Kartenkörper implantiert und verklebt. Diese Ausführungsform mit Folienverbundmaterial 4 sowohl als Kern-Teilschicht als auch als Deckschicht verleiht dem Kartenkörper 5 besonders vorteilhafte mechanische Eigenschaften. Einerseits werden beim Implantieren des Moduls durch die Temperatureinwirkung aufgebaute Spannungen durch die Kern-Teilschichten gut ausgeglichen, und andererseits sorgen die weit außen liegenden Deckfolien 8, 8' aus Folienverbundmaterial 4 für eine hohe Bruchfestigkeit, fehlende Verblockungsneigung, gute Bedruckbarkeit und Steifigkeit.
In den Figuren 4, 5 und 6 sind die Kartenaufbauten jeweils symmetrisch dargestellt, was jedoch nicht zwingend ist. Möglich sind beispielsweise auch Ausführungsformen, bei denen das Folienverbundmaterial 4 nur als eine der Deckschichten und/oder als eine Kern-Teilschicht verwendet wird. Bei Verwendung als Deckschicht ist die Schichtdicke des Folienverbundmaterials 4 typischerweise maximal halb so groß wie bei der Verwendung als Kern-Teilschicht.

Durch den Einsatz des Folienverbundmaterials 4 als Deckschicht(en) und/oder als Kernschicht(en) in einem Kartenkörper können die mechanischen Eigenschaften von Kartenkörpern gegenüber Kartenkörpern des Stands der Technik maßgeblich verbessert werden. Die Kartenkörper können stärkeren und häufigeren Biegebelastungen ausgesetzt werden, ohne dass es zu Spannungen, Rissen oder Brüchen des Kartenkörpers kommt. Auch Spannungen, die durch den Einbau elektronischer Module, die stets eine Schwächung des Kartenkörpers bewirken, entstehen, können ausgeglichen und somit die mechanischen Eigenschaften des Kartenkörpers verbessert werden. Das Folienverbundmaterial 4 kann in den Kartenkörpern anstelle jeder beliebigen Standardfolie eingesetzt werden.

Insbesondere Kartenaufbauten, bei denen das Folienverbundmaterial 4 im Inneren des Kartenaufbaus eingesetzt wird, wie in Fig. 5 beispielhaft dargestellt, haben ausgezeichnete mechanische Eigenschaften, wie hervorragende Festigkeit und Steifigkeit. Dies zeigt sich besonders bei schlagartigen Krafteinwirkungen, die ansonsten im Regelfall zum Kartenbruch führen. Verantwortlich dafür ist die größere Dicke der Folienverbundmaterial-Kernschichten, und damit der höhere Anteil des Folienverbundmaterials 4 am Kartenkörper insgesamt.

Das Folienverbundmaterial 4 ist auch in sich selbst sehr stabil, d.h. es besteht ein fester Verbund zwischen seinen einzelnen Teilschichten, ohne die Gefahr einer Trennung der Teilschichten voneinander bei Belastung. Diese Stabilität wird durch geeignete Abstufungen der Zusammensetzungen der Teilschichten, die ähnliche Verarbeitungseigenschaften benachbarter Teilschichten zur Folge haben, erzielt.

Das Folienverbundmaterial 4 kann preisgünstig hergestellt werden, und es steht ein breites Spektrum an geeigneten thermoplastischen Elastomeren mit unterschiedlichen Eigenschaften auf dem Markt zur Verfügung. Das Folienverbundmaterial 4 ist einfach im Coextrusionsverfahren zu verarbeiten und zeichnet sich auch durch eine besonders einfache Handhabung bei der Weiterverarbeitung aus, d.h. es kann beispielsweise problemlos bedruckt und mit allen gängigen Kartenmaterialien laminiert werden. Es neigt auch nicht zum Verblocken. Das Folienmaterial kann mit einem hohen Anteil an thermoplastischem Elastomer hergestellt werden, wodurch es sehr elastisch ist und, bei Verwendung als Schicht in einem Kartenkörper, die mechanischen Eigenschaften des Kartenkörpers gegenüber Kartenkörpern ohne das Folienverbundmaterial 4 deutlich verbessert.

## Patentansprüche

1. Folienverbundmaterial (4) zur Verwendung als Schicht in einem Kartenkörper eines tragbaren Datenträgers mit
- mindestens einer ersten Kunststoff-Außenschicht (1),
- mindestens einer Kunststoff-Innenschicht (3),
- mindestens einer zweiten Kunststoff-Außenschicht (2),
wobei alle Schichten (1, 3, 2) gemeinsam einen Coextrusionsverbund bilden, **dadurch gekennzeichnet, dass**
- der Kunststoff der mindestens einen ersten Außenschicht (1) ein thermoplastisches Polymer oder ein Gemisch von thermoplastischen Polymeren ist,
- der Kunststoff der mindestens einen Innenschicht (3) ein Gemisch aus mindestens einem thermoplastischen Elastomer und mindestens einem thermoplastischen Polymer ist,
- der Kunststoff der mindestens einen zweiten Außenschicht (2) ein thermoplastisches Polymer oder ein Gemisch von thermoplastischen Polymeren ist
wobei der Kunststoff der ersten (1) und/ oder der zweiten (2) Außenschicht ein PETG, ein Polycarbonat oder ein Gemisch von Polycarbonaten, oder ein Blend aus PETG und Polycarbonat ist,
wobei das mindestens eine thermoplastische Elastomer der Innenschicht (3) ein Urethan-Elastomer auf der Basis von aromatischen Estern oder aromatischen Ethern ist,
wobei wenn der Thermoplast einer angrenzenden bzw. nächstliegenden Außenschicht ein PETG ist, dann hat das thermoplastische Elastomer eine Shore D-Härte von 35 bis 50, und wenn der Thermoplast ein Polycarbonat ist, hat das Elastomer eine Shore D-Härte von 40 bis 70 oder von 50 bis 65.

2. Folienverbundmaterial (4) nach Anspruch 1, **dadurch gekennzeichnet, dass** die Kunststoff-Innenschicht (3) aus einer inneren Schicht (31) und einer ersten äußeren (32) und einer zweiten äußeren (33) Schicht besteht.

3. Folienverbundmaterial (4) nach Anspruch 1 oder 2, **dadurch gekennzeichnet, dass** die Kunststoff-Innenschicht (3) dasselbe thermoplastische Polymer oder Gemisch von thermoplastischen Polymeren enthält wie die erste (1) und/oder die zweite (2) Außenschicht.

4. Folienverbundmaterial (4) nach einem der Ansprüche 1 bis 3, **dadurch gekennzeichnet, dass** das Folienverbundmaterial transparent ist und eine erste Kunststoff-Außenschicht (1), eine erste äußere Kunststoff-Innenschicht (32), eine innere Kunststoff-Innenschicht (31), eine zweite äußere Kunststoff-Innenschicht (33) und eine zweite Kunststoff-Außenschicht (2) aufweist, wobei ohne Berücksichtigung von Additiven der Kunststoff der ersten und der zweiten Außenschicht (1, 2) zu 100% ein Thermoplast ist,
der Kunststoff der ersten und der zweiten äußeren Innenschicht (32, 33) zu 50 bis 80% aus Thermoplast und zu 20 bis 50% aus Elastomer besteht, und
der Kunststoff der inneren Innenschicht (31) zu 30 bis 70%, oder 30 bis 50%, aus Thermoplast und zu 70 bis 30%, oder 70 bis 50%, aus Elastomer besteht.

5. Folienverbundmaterial (4) nach einem der Ansprüche 1 bis 3, **dadurch gekennzeichnet, dass** das Folienverbundmaterial opak ist und eine erste Kunststoff-Außenschicht (1), eine erste äußere Kunststoff-Innenschicht (32), eine innere Kunststoff-Innenschicht (31), eine zweite äußere Kunststoff-Innenschicht (33) und eine zweite Kunststoff-Außenschicht (2) aufweist, wobei unter Berücksichtigung von Kunststoffen und Füllstoffen das Material der ersten und der zweiten Kunststoff-Außenschicht (1, 2) zu 85% bis 95% aus Thermoplast und zu 5 bis 15% aus Füllstoff besteht, das Material der ersten und der zweiten äußeren Kunststoff-Innenschicht (32, 33) zu 20 bis 50% aus Elastomer, zu 75 bis 35% aus Thermoplast und zu 5 bis 15% aus Füllstoff besteht und
das Material der inneren Kunststoff-Innenschicht zu 50 bis 70% aus Elastomer, zu 15 bis 45% aus Thermoplast und zu 5 bis 15% aus Füllstoff besteht.

6. Folienverbundmaterial (4) nach einem der Ansprüche 1 bis 5, **dadurch gekennzeichnet, dass** die Dicke der Kunststoff-Innenschicht (3) 40 bis 80% der Gesamtdicke des Folienverbundmaterials (4) ausmacht.

7. Verfahren zur Herstellung eines Folienverbundmaterials (4) nach einem der Ansprüche 1 bis 6 zur Verwendung als Schicht in einem Kartenkörper eines tragbaren Datenträgers, aufweisend ein Coextrudieren mindestens eines ersten Außenschicht-Kunststoffmaterials, mindestens eines zweiten Außenschicht-Kunststoffmaterials, und mindestens eines Innenschicht-Kunststoffmaterials, **dadurch gekennzeichnet, dass**
- alle Kunststoffmaterialien extrudiert und so zusammengeführt werden, dass ein Folienverbundmaterial (4) gebildet wird, bei dem eine Kunststoff-Innenschicht (3) beidseitig von einer ersten (1) und einer zweiten (2) Kunststoff-Außenschicht bedeckt wird,
- das mindestens eine erste Außenschicht-Kunststoffmaterial als Kunststoff ein thermoplastisches Polymer oder ein Gemisch von thermoplastischen Polymeren aufweist,
- das mindestens eine zweite Außenschicht-Kunststoffmaterial als Kunststoff ein thermoplastisches Polymer oder ein Gemisch von thermoplastischen Polymeren aufweist, und
- das mindestens eine Innenschicht-Kunststoffmaterial als Kunststoff ein Gemisch aus mindestens einem thermoplastischen Elastomer und mindestens einem thermoplastischen Polymer aufweist,
wobei als Kunststoff der ersten (1) und/oder der zweiten (2) Außenschicht ein PETG, ein Polycarbonat oder ein Gemisch von Polycarbonaten, oder ein Blend aus PETG und Polycarbonat verwendet wird,
wobei für das mindestens eine thermoplastische Elastomer der Innenschicht (3) ein Urethan-Elastomer auf der Basis von aromatischen Estern oder aromatischen Ethern verwendet wird,
wobei wenn als Thermoplast einer angrenzenden bzw. nächstliegenden Außenschicht ein PETG verwendet wird, dann hat das thermoplastische Elastomer eine Shore D-Härte von 35 bis 50, und wenn als Thermoplast ein Polycarbonat verwendet wird, hat das Elastomer eine Shore D-Härte von 40 bis 70 oder von 50 bis 65.

8. Verfahren nach Anspruch 7, **dadurch gekennzeichnet, dass** Kunststoffmaterialien mit Merkmalen, wie sie in einem der vorangehenden Ansprüche angegeben sind, verwendet werden.

9. Verfahren nach Anspruch 7 oder 8, **dadurch gekennzeichnet, dass** eine Kunststoff-Innenschicht (3) aus einer inneren Schicht (31) und einer ersten äußeren (32) und einer zweiten äußeren (33) Schicht gebildet wird, und die erste und die zweite Kunststoff-Außenschicht (1, 2) bei einer Düsentemperatur von 200 bis 280°C, oder 210 bis 260°C, extrudiert werden, die erste und die zweite äußere Kunststoff-Innenschicht (32, 33) bei einer Düsentemperatur von 200 bis 270°C, oder 210 bis 260°C, extrudiert werden, und die innere Kunststoff-Innenschicht (31) bei einer Düsentemperatur von 190 bis 270°C, oder 220 bis 250°C, extrudiert wird.

10. Kartenkörper (5) für einen tragbaren Datenträger, mit einer Mehrzahl von miteinander laminierten Kunststoffschichten, umfassend
- einen Kartenkern (6) aus mindestens einer Kerninnenschicht (9),
- mindestens zwei Deckschichten (8, 8'), um beide Oberflächen des Kartenkerns (6) zu bedecken, und
- gegebenenfalls mindestens eine Kernaußenschicht (7, 7') zwischen der Kerninnenschicht (9) und mindestens einer der Deckschichten (8, 8'),
**dadurch gekennzeichnet, dass** mindestens eine der Deckschichten (8, 8') und/oder mindestens eine Kernaußenschicht (7, 7') ein Folienverbundmaterial (4) nach einem der Ansprüche 1 bis 6 oder ein nach einem Verfahren der Ansprüche 7 bis 9 erhältliches Folienverbundmaterial (4) ist.

11. Verfahren zur Herstellung eines Kartenkörpers (5) für einen tragbaren Datenträger, mit einer Mehrzahl von Kunststoffschichten, umfassend:
- einen Kartenkern (6) aus mindestens einer Kerninnenschicht (9),
- mindestens zwei Deckschichten (8, 8'), um beide Oberflächen des Kartenkerns (6) zu bedecken, und
- gegebenenfalls mindestens eine Kernaußenschicht (7, 7') zwischen der Kerninnenschicht (9) und mindestens einer der Deckschichten (8, 8'),
bei dem die Kunststoffschichten in einem Arbeitsvorgang oder in mehreren Arbeitsvorgängen miteinander laminiert werden, **dadurch gekennzeichnet, dass** als mindestens eine der Deckschichten (8, 8') und/oder als mindestens eine Kernaußenschicht (7, 7') ein Folienverbundmaterial (4) nach einem der Ansprüche 1 bis 6 oder ein nach einem Verfahren nach einem der Ansprüche 7 bis 9 erhältliches Folienverbundmaterial (4) verwendet wird.

12. Verfahren nach Anspruch 11, **dadurch gekennzeichnet, dass** das Laminieren bei einer Temperatur von zwischen 120°C und 200°C erfolgt, oder zwischen 130°C und 180°C, oder zwischen 130°C und 150°C.

## Claims

1. A foil composite material (4) for use as a layer in a card body of a portable data carrier having:
- at least one first outer plastic layer (1),
- at least one inner plastic layer (3),
- at least one second outer plastic layer (2),
wherein all the layers (1, 3, 2) jointly form a coextruded composite, **characterized in that**
- the plastic of the at least one first outer layer (1) is a thermoplastic polymer or a mixture of thermoplastic polymers,
- the plastic of the at least one inner layer (3) is a mixture of at least one thermoplastic elastomer and at least one thermoplastic polymer,
- the plastic of the at least one second outer layer (2) is a thermoplastic polymer or a mixture of thermoplastic polymers
wherein the plastic of the first (1) and/or the second (2) outer layer is a PETG, a polycarbonate or a mixture of polycarbonates, or a blend of PETG and polycarbonate,
wherein the at least one thermoplastic elastomer of the inner layer (3) is a urethane elastomer based on aromatic esters or aromatic ethers,
wherein when the thermoplastic of an adjacent or closest outer layer is a PETG then the thermoplastic elastomer has a Shore D hardness of 35 to 50, and when the thermoplastic is a polycarbonate the elastomer has a Shore D hardness of 40 to 70 or of 50 to 65.

2. The foil composite material (4) according to claim 1, **characterized in that** the inner plastic layer (3) consists of an interior layer (31) and a first exterior (32) and a second exterior (33) layer.

3. The foil composite material (4) according to claim 1 or 2, **characterized in that** the inner plastic layer (3) contains the same thermoplastic polymer or mixture of thermoplastic polymers as the first (1) and/or the second (2) outer layer.

4. The foil composite material (4) according to any of claims 1 to 3, **characterized in that** the foil composite material is transparent and has a first outer plastic layer (1), a first exterior inner plastic layer (32), an interior inner plastic layer (31), a second exterior inner plastic layer (33) and a second outer plastic layer (2), wherein, without consideration of additives, the plastic of the first and the second outer layer (1, 2) is 100% a thermoplastic,
the plastic of the first and the second exterior inner layer (32, 33) consists of 50 to 80% thermoplastic and 20 to 50% elastomer, and
the plastic of the interior inner layer (31) consists of 30 to 70%, or 30 to 50%, thermoplastic and of 70 to 30%, or 70 to 50%, elastomer.

5. The foil composite material (4) according to any of claims 1 to 3, **characterized in that** the foil composite material is opaque and has a first outer plastic layer (1), a first exterior inner plastic layer (32), an interior inner plastic layer (31), a second exterior inner plastic layer (33) and a second outer plastic layer (2), wherein, with consideration of plastics and fillers, the material of the first and the second outer plastic layer (1, 2) consists of 85% to 95% thermoplastic and of 5 to 15% filler, the material of the first and the second exterior inner plastic layer (32, 33) consists of 20 to 50% elastomer, of 75 to 35% thermoplastic and of 5 to 15% filler, and
the material of the interior inner plastic layer consists of 50 to 70% elastomer, of 15 to 45% thermoplastic and of 5 to 15% filler.

6. The foil composite material (4) according to any of claims 1 to 5, **characterized in that** the thickness of the inner plastic layer (3) constitutes 40 to 80% of the total thickness of the foil composite material (4).

7. A method for manufacturing a foil composite material (4) according to any of claims 1 to 6 for use as a layer in a card body of a portable data carrier, having a coextrusion of at least one first outer layer plastic material, at least one second outer layer plastic material, and at least one inner layer plastic material, **characterized in that**
- all the plastic materials are extruded and merged so as to form a foil composite material (4) in which an inner plastic layer (3) is covered on both sides by a first (1) and a second (2) outer plastic layer,
- the at least one first outer layer plastic material has as a plastic a thermoplastic polymer or a mixture of thermoplastic polymers,
- the at least one second outer layer plastic material has as a plastic a thermoplastic polymer or a mixture of thermoplastic polymers, and
- the at least one inner layer plastic material has as a plastic a mixture of at least one thermoplastic elastomer and at least one thermoplastic polymer,
wherein there is used as the plastic of the first (1) and/or the second (2) outer layer a PETG, a polycarbonate or a mixture of polycarbonates, or a blend of PETG and polycarbonate,
wherein there is used for the at least one thermoplastic elastomer of the inner layer (3) a urethane elastomer based on aromatic esters or aromatic ethers,
wherein when a PETG is used as the thermoplastic of an adjacent or closest outer layer then the thermoplastic elastomer has a Shore D hardness of 35 to 50, and when a polycarbonate is used as the thermoplastic the elastomer has a Shore D hardness of 40 to 70 or of 50 to 65.

8. The method according to claim 7, **characterized in that** plastic materials having features as stated in one of the preceding claims are used.

9. The method according to claim 7 or 8, **characterized in that** an inner plastic layer (3) is formed from an interior layer (31) and a first exterior (32) and a second exterior (33) layer, and the first and the second outer plastic layer (1, 2) are extruded at a nozzle temperature of 200 to 280°C, or 210 to 260°C, the first and the second exterior inner plastic layer (32, 33) are extruded at a nozzle temperature of 200 to 270°C, or 210 to 260°C, and the interior inner plastic layer (31) is extruded at a nozzle temperature of 190 to 270°C, or 220 to 250°C.

10. A card body (5) for a portable data carrier, having a plurality of plastic layers laminated to each other, comprising
- a card core (6) made of at least one inner core layer (9),
- at least two cover layers (8, 8') for covering both surfaces of the card core (6), and
- where applicable, at least one outer core layer (7, 7') between the inner core layer (9) and at least one of the cover layers (8, 8'),
**characterized in that** at least one of the cover layers (8, 8') and/or at least one outer core layer (7, 7') is a foil composite material (4) according to any of claims 1 to 6 or a foil composite material (4) obtainable by a method of claims 7 to 9.

11. A method for manufacturing a card body (5) for a portable data carrier, having a plurality of plastic layers, comprising:
- a card core (6) made of at least one inner core layer (9),
- at least two cover layers (8, 8') for covering both surfaces of the card core (6), and
- where applicable, at least one outer core layer (7, 7') between the inner core layer (9) and at least one of the cover layers (8, 8'),
in which the plastic layers are laminated to each other in one work operation or in several work operations, **characterized in that** there is used as at least one of the cover layers (8, 8') and/or as at least one outer core layer (7, 7') a foil composite material (4) according to any of claims 1 to 6 or a foil composite material (4) obtainable by a method according to any of claims 7 to 9.

12. The method according to claim 11, **characterized in that** laminating is effected at a temperature of between 120°C and 200°C, or between 130°C and 180°C, or between 130°C and 150°C.

## Revendications

1. Matériau en film composite (4) destiné à une utilisation en tant que couche dans un corps de carte d'un support de données portable, comportant
- au moins une première couche extérieure (1) en matière plastique,
- au moins une couche intérieure (3) en matière plastique,
- au moins une deuxième couche extérieure (2) en matière plastique,
toutes les couches (1, 3, 2) constituant ensemble un composite coextrudé, **caractérisé en ce que**
- la matière plastique de la au moins une première couche extérieure (1) est un polymère thermoplastique ou un mélange de polymères thermoplastiques,
- la matière plastique de la au moins une couche intérieure (3) est un mélange d'au moins un élastomère thermoplastique et d'au moins un polymère thermoplastique,
- la matière plastique de la au moins une deuxième couche extérieure (2) est un polymère thermoplastique ou un mélange de polymères thermoplastiques,
cependant que la matière plastique de la première (1) et/ou de la deuxième (2) couche extérieure est un PETG, un polycarbonate ou un mélange de polycarbonates, ou un blend de PETG et de polycarbonate,
cependant que le moins un élastomère thermoplastique de la couche intérieure (3) est un élastomère uréthane sur la base d'esters aromatiques ou d'éthers aromatiques,
cependant que, si le thermoplastique d'une couche extérieure adjacente ou la plus proche est un PETG, l'élastomère thermoplastique a alors une dureté D Shore de 35 à 50, et si le thermoplastique est un polycarbonate, l'élastomère a une dureté D Shore de 40 à 70 ou de 50 à 65.

2. Matériau en film composite (4) selon la revendication 1, **caractérisé en ce que** la couche intérieure (3) en matière plastique consiste en une couche interne (31) et une première couche externe (32) et une deuxième couche externe (33).

3. Matériau en film composite (4) selon la revendication 1 ou 2, **caractérisé en ce que** la couche intérieure (3) en matière plastique contient le même polymère thermoplastique ou mélange de polymères thermoplastiques que la première (1) et/ou la deuxième (2) couche extérieure.

4. Matériau en film composite (4) selon une des revendications de 1 à 3, **caractérisé en ce que** le matériau en film composite est transparent et comporte une première couche extérieure (1) en matière plastique, une première couche intérieure externe (32) en matière plastique, une couche intérieure interne (31) en matière plastique, une deuxième couche intérieure externe (33) en matière plastique et une deuxième couche extérieure (2)en matière plastique, cependant que, sans prise en compte d'additifs,
la matière plastique de la première et de la deuxième couche extérieure (1, 2) est à 100% un thermoplastique,
la matière plastique de la première et de la deuxième couche intérieure externe (32, 33) consiste à entre 50 et 80% en du thermoplastique et à entre 20 et 50% en de l'élastomère, et
la matière plastique de la couche intérieure interne (31) consiste à entre 30 et 70% ou 30 à 50% en du thermoplastique et à entre 70 et 30% ou 70 à 50% en de l'élastomère.

5. Matériau en film composite (4) selon une des revendications de 1 à 3, **caractérisé en ce que** le matériau en film composite est opaque et comporte une première couche extérieure (1) en matière plastique, une première couche intérieure externe (32) en matière plastique, une couche intérieure interne (31) en matière plastique, une deuxième couche intérieure externe (33) en matière plastique et une deuxième couche extérieure (2) en matière plastique, cependant que, avec prise en compte de matières plastiques et de matières de charge,
le matériau de la première et de la deuxième couche extérieure (1, 2) en matière plastique consiste à entre 85% et 95% en du thermoplastique et à entre 5 et 15% en de la matière de charge,
le matériau de la première et de la deuxième couche intérieure externe (32, 33) en matière plastique consiste à entre 20 et 50% en de l'élastomère, à entre 75 et 35% en du thermoplastique et à entre 5 et 15% en de la matière de charge, et
le matériau de la couche intérieure interne en matière plastique consiste à entre 50 et 70% en de l'élastomère, à entre 15 et 45% en du thermoplastique et à entre 5 et 15% en de la matière de charge.

6. Matériau en film composite (4) selon une des revendications de 1 à 5, **caractérisé en ce que** l'épaisseur de la couche intérieure (3) en matière plastique correspond à entre 40 et 80% de l'épaisseur totale du matériau en film composite (4).

7. Procédé de fabrication d'un matériau en film composite (4) selon une des revendications de 1 à 6 pour l'utilisation en tant que couche dans un corps de carte d'un support de données portable, comportant une coextrusion d'au moins un premier matériau en matière plastique de couche extérieure, d'au moins un deuxième matériau en matière plastique de couche extérieure, et d'au moins un matériau en matière plastique de couche intérieure, **caractérisé en ce que**
- tous les matériaux en matière plastique sont extrudés et sont accolés de telle façon qu'un matériau en film composite (4) est constitué, dans lequel une couche intérieure (3) en matière plastique est recouverte sur ses deux faces par une première (1) et une deuxième (2) couche extérieure en matière plastique,
- le au moins un premier matériau en matière plastique de la couche extérieure comporte en tant que matière plastique un polymère thermoplastique ou un mélange de polymères thermoplastiques,
- le au moins un deuxième matériau en matière plastique de la couche extérieure comporte en tant que matière plastique un polymère thermoplastique ou un mélange de polymères thermoplastiques, et
- le au moins un matériau en matière plastique de la couche intérieure comporte en tant que matière plastique un mélange d'au moins un élastomère thermoplastique et d'au moins un polymère thermoplastique,
cependant que, en tant que matière plastique de la première (1) et/ou de la deuxième (2) couche extérieure, un PETG, un polycarbonate ou un mélange de polycarbonates, ou un blend de PETG et de polycarbonate est utilisé,
cependant que, pour le au moins un élastomère thermoplastique de la couche intérieure (3), un élastomère uréthane sur la base d'esters aromatiques ou d'éthers aromatiques est utilisé, cependant que, si en tant que thermoplastique d'une couche extérieure adjacente ou la plus proche,un PETG est utilisé, l'élastomère thermoplastique a alors une dureté D Shore de 35 à 50, et si en tant que thermoplastique un polycarbonate est utilisé, l'élastomère a une dureté D Shore de 40 à 70 ou de 50 à 65.

8. Procédé selon la revendication 7, **caractérisé en ce que** des matériaux en matière plastique ayant des caractéristiques telles qu' indiquées dans une des revendications précédentes sont utilisés.

9. Procédé selon la revendication 7 ou 8, **caractérisé en ce qu'**une couche intérieure (3) en matière plastique est constituée par une couche interne (31) et une première couche externe (32) et une deuxième couche externe (33), et **en ce que** la première et la deuxième couche intérieure (1, 2) en matière plastique sont extrudées à une température de filière de 200 à 280° ou de 210 à 260°,la première et la deuxième couche intérieure externe (32, 33) en matière plastique sont extrudées à une température de filière de 200 à 270° ou de 210 à 260°, et la couche intérieure interne (31) est extrudée à une température de filière de 190 à 270° ou de 220 à 250°.

10. Corps de carte (5) destiné à un support de données portable, ayant une pluralité de couches en matière plastique laminées les unes aux autres, comportant
- un noyau de carte (6) en au moins une couche intérieure de noyau (9),
- au moins deux couches de recouvrement (8, 8') afin de recourir les deux surfaces du noyau de carte (6), et
- le cas échéant, au moins une couche extérieure de noyau (7, 7') entre la couche intérieure de noyau (9) et au moins une des couches de recouvrement (8, 8'),
**caractérisé en ce qu'**au moins une des couches de recouvrement (8, 8') et/ou au moins une couche extérieure de noyau (7, 7') est un matériau en film composite (4) selon une des revendications de 1 à 6 ou un matériau en film composite (4) pouvant être obtenu suivant un procédé des revendications de 7 à 9.

11. Procédé de fabrication d'un corps de carte (5) pour un support de données portable, ayant une pluralité de couches en matière plastique, comportant
- un noyau de carte (6) en au moins une couche intérieure de noyau (9),
- au moins deux couches de recouvrement (8, 8') afin de recourir les deux surfaces du noyau de carte (6), et
- le cas échéant, au moins une couche extérieure de noyau (7, 7') entre la couche intérieure de noyau (9) et au moins une des couches de recouvrement (8, 8'),
dans lequel les couches en matière plastique sont laminées les unes aux autres en une opération ou en plusieurs opérations, **caractérisé en ce que**, en tant qu'au moins une des couches de recouvrement (8, 8') et/ou qu'au moins une couche extérieure de noyau (7, 7'), un matériau en film composite (4) selon une des revendications de 1 à 6 ou un matériau en film composite (4) pouvant être obtenu suivant un procédé selon une des revendications de 7 à 9 est utilisé.

12. Procédé selon la revendication 11, **caractérisé en ce que** le laminage a lieu à une température située entre 120°C et 200°C, ou entre 130°C et 180°C, ou entre 130°C et 150°C.
